# FASCICULE DE BREVET EUROPEEN

(11) **EP 1 119 896 B1**
(45) Date de publication et mention de la délivrance du brevet: **20.07.2005**
(21) Numéro de dépôt: 99970216.0
(22) Date de dépôt: 06.10.1999
(51) Int. Cl.: H02K 49/10, H02K 49/06, H02K 21/24, B01F 13/08

(54) **DISPOSITIF D'AGITATION DE LIQUIDE A ACCOUPLEMENT MAGNETIQUE**
RÜHRVORRICHTUNG FÜR FLÜSSIGKEITEN MIT MAGNETISCHER KUPPLUNG.
DEVICE WITH MAGNETIC COUPLING FOR STIRRING A LIQUID

(30) Priorité: 07.10.1998 FR 9812557
(43) Date de publication de la demande: 01.08.2001
(73) Titulaire: COMPAGNIE GENERALE DES MATIERES NUCLEAIRES, 78140 Velizy Villacoublay (FR)
(72) Inventeur: BIARDEAU, Olivier, F-50120 Equeurdreville (FR); LEPRESLE, Frédéric, F-50460 Urville-Nacqueville (FR); CHERIFI, Abderrezzak, Porte 53, 50130 Octeville (FR)
(74) Mandataire: Desormiere, Pierre-Louis
(86) Numéro de dépôt international: PCT/FR1999/002385
(87) Numéro de publication internationale: WO 2000/021184

(56) Documents cités:
- DE-A- 4 434 558
- DE-A- 4 439 306
- US-A- 4 199 265
- US-A- 4 568 195
- US-A- 5 533 800

## Description

La présente invention concerne de manière générale les dispositifs d'agitation de liquide, et plus particulièrement les dispositifs d'agitation à accouplement magnétique.

Les dispositifs d'agitation à accouplement magnétique assurent généralement la transmission, sans contact, d'un mouvement de rotation d'une partie magnétique menante vers une partie magnétique menée. Les parties menante et menée sont respectivement disposées à l'extérieur et au fond d'un récipient de liquide à agiter. Cette transmission de mouvement peut être qualifiée d"'accouplement de type axial sans guidage de la partie menée ".

Par rapport aux dispositifs d'agitation moins récents à accouplement mécanique, la transmission du mouvement de rotation sans contact permet d'éviter les traversées de parois par des joints mécaniques tournants qui présentent des risques de fuites.

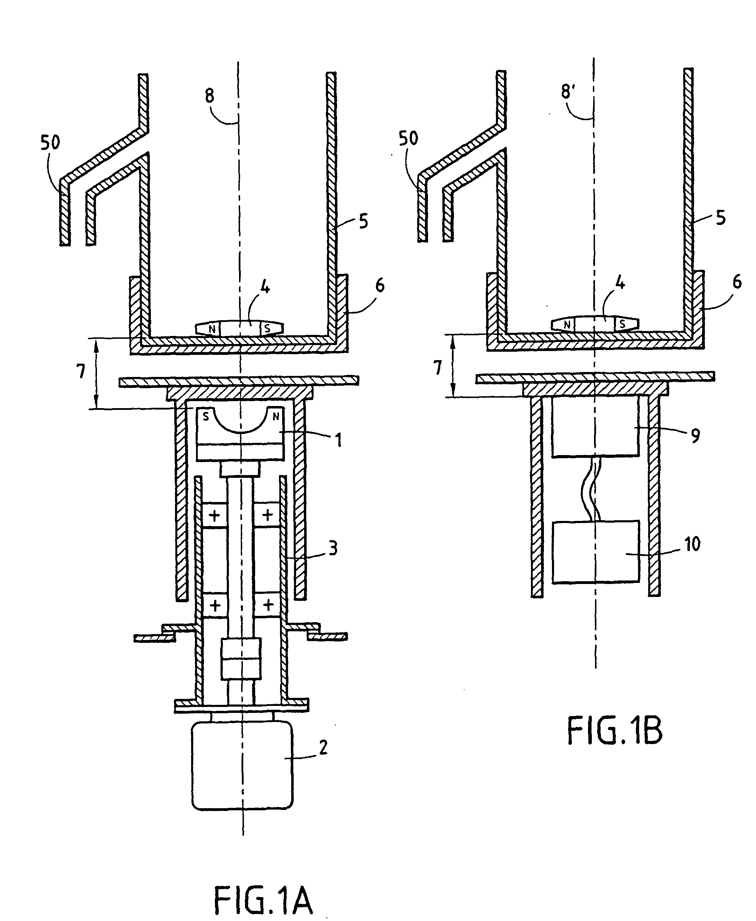

Les figures 1 A et 1B montrent deux dispositifs connus d'agitation à accouplement magnétique.

Le dispositif de la figure 1A comprend une partie magnétique menante 1 qui peut être entraînée en rotation axiale par un moteur 2 via notamment des moyens de transmission 3, et une partie magnétique menée 4. La partie menée 4 est posée au fond d'un récipient 5 qui est supporté par un moyen de support 6 au-dessus de la partie menante 1. Le récipient 5 et le moyen de support 6 sont conçus en un matériau amagnétique. Les parties menante 1 et menée 4, les moyens de transmission 3 et le moteur 2 sont centrés autour d'un axe de symétrie vertical 8. La partie menée 4 est typiquement un aimant permanent en forme de barreau, ayant une paire de pôles magnétiques Nord-Sud. La partie menante 1 est constituée par un aimant permanent en forme de U et dont les pôles magnétiques sont en regard des pôles magnétiques du barreau 4 lorsque le dispositif d'agitation est au repos. Les aimants 1 et 4 sont généralement conçus avec des matériaux tels que les ferrites ou les Alnico (Aluminium/Nickel/Cobalt).

Lorsque le moteur 2 est en fonctionnement, la partie menée 4 est entraînée en rotation axiale autour de l'axe de symétrie 8 par accouplement magnétique avec la partie menante 1 à travers un entrefer 7. Plus précisément, lorsque la partie menante 1 tourne autour de l'axe 8, sous l'action du moteur 2, un couple est transmis à la partie menée 4 qui fait tourner celle-ci autour de ce même axe.

Le récipient 5 contient des réactifs chimiques sous forme liquide. La rotation axiale du barreau magnétique 4 permet l'agitation des liquides contenus dans le récipient 5 et favorise par exemple l'obtention de précipités qui sont évacués par une sortie d'évacuation 50 sur une face latérale du récipient 5. Dans un tel cas de réaction de précipitation, le dispositif d'agitation montré à la figure 1A est appelé " précipitateur ".

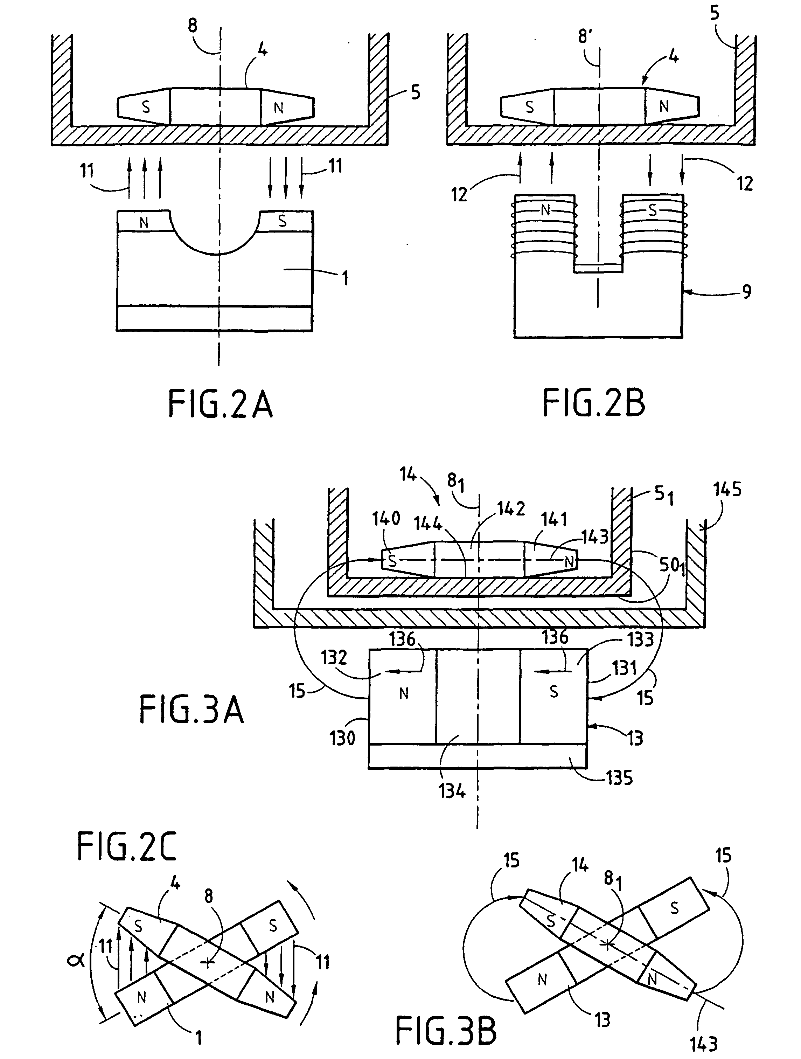

La figure 1B montre un autre exemple de dispositif d'agitation connu. A la figure 1B, les éléments représentés qui sont identiques à ceux de la figure 1A sont désignés par les mêmes repères. Le dispositif de la figure 1B diffère de celui illustré à la figure 1A en ce que la partie menante 1, le moteur 2 et les moyens de transmission 3 sont remplacés par une motorisation statique 9 alimentée par une source de tension alternative (en créneau) 10. La motorisation statique 9 inclut des électroaimants disposés verticalement (dont un est représenté schématiquement à la figure 2B) qui sont alimentés par une tension délivrée par la source 10 et commutés en alternance. La motorisation statique 9 produit le même effet que les éléments 1, 2 et 3 de la figure 1A, c'est-à-dire produit un champ magnétique tournant qui entraîne en rotation axiale le barreau magnétique 4 par accouplement magnétique autour d'un axe de symétrie vertical 8'.

Le dispositif à motorisation statique de la figure 1B présente plusieurs avantages par rapport au dispositif à moteur tournant de la figure 1A. En particulier, il ne nécessite pas l'emploi de pièces mécaniques en mouvement et son encombrement est moins important. Egalement, il est possible dans le dispositif à motorisation statique de faire varier le couple transmis à la partie menée simplement en modifiant l'intensité du courant fourni aux bobines des électroaimants. Dans le cas du dispositif à moteur tournant, le réglage du couple transmis ne peut être réalisé que par variation physique de l'entrefer au moyen d'un dispositif mécanique.

Un inconvénient majeur des dispositifs de la technique antérieure illustrés aux figures 1A et 1B réside dans le fait que la valeur du couple transmissible à la partie menée est limitée. En effet, l'augmentation de ce couple accroît l'effort d'attraction du barreau 4 sur le fond du récipient et augmente l'usure par frottement du barreau ainsi que l'usure du fond du récipient.

Les figures 2A et 2B montrent schématiquement en vue de face la disposition relative des parties menante et menée lorsque la partie menante est constituée par un aimant permanent 1 (figure 2A) ou des électroaimants 9 (figure 2B). La figure 2C montre schématiquement en vue de dessus l'agencement de la figure 2A. Comme illustré à la figure 2C, lorsque le dispositif d'agitation est en fonctionnement, la partie menée 4 est en permanence en retard d'un angle α par rapport au champ tournant produit par la partie menante. Les lignes de champ, représentées par les flèches 11 (figures 2A et 2C) et 12 (figure 2B), entre les pôles des parties menante et menée, ont une composante horizontale (figure 2C), qui contribue au couple transmis à la partie menée, et une composante axiale verticale (figures 2A et 2B) parallèle à l'axe de rotation 8, 8'. L'effort axial dû à cette composante axiale constitue une part très importante de l'énergie d'interaction entre les parties menante et menée. Toute augmentation du couple transmis à l'aimant mené 4 entraîne automatiquement une augmentation de l'attraction axiale entre les parties menante et menée et donc une augmentation de l'usure de l'aimant mené 4 et du fond du récipient 5, en raison de la présence significative de cette composante axiale des lignes de champ.

Le document US-A-5 533 800 décrit un dispositif d'agitation à accouplement magnétique comprenant une partie menante et une partie menée, les lignes de champ des parties menante et menée étant sensiblement perpendiculaires à l'axe de rotation de la partie menée.

La présente invention vise à fournir un dispositif d'agitation de liquide selon la revendication 1 qui permette, par rapport aux dispositifs antérieurs, de réduire l'usure de la partie menée et du fond du récipient pour un même couple transmis à la partie menée.

A cette fin, un dispositif d'agitation de liquide à accouplement magnétique comprenant une partie menante et une partie menée, la partie menée étant destinée à être déposée au fond d'un récipient contenant du liquide à agiter, un moyen de commande pour commander la partie menante de manière à entraîner la partie menée en rotation par couplage magnétique avec la partie menante autour d'un axe de rotation prédéterminé, est caractérisé en ce que les parties menante et menée sont configurées de façon à favoriser l'orientation des lignes de champ résultant du couplage magnétique sensiblement perpendiculairement audit axe de rotation prédéterminé à proximité de la partie menée.

En pratique, de préférence les parties menante et menée sont configurées de façon à favoriser l'orientation des lignes de champ résultant du couplage magnétique sensiblement parallèlement à un axe longitudinal de la partie menée à proximité de cette dernière.

L'axe de rotation prédéterminé est typiquement, mais pas obligatoirement, un axe de symétrie vertical (virtuel) de la partie menée et/ou de la partie menante. Lorsque le dispositif est en fonctionnement, la partie menée est simplement posée au fond du récipient et n'est donc soumise qu'à son poids, aux forces de frottement avec le fond du récipient, et aux forces électromagnétiques générées par la partie menante à travers le récipient. Le récipient, ou au moins une partie de celui-ci proche de la partie menante, est conçu en un matériau amagnétique, afin qu'il puisse être traversé par les lignes de champ.

Ainsi, contrairement aux dispositifs antérieurs, une grande partie des lignes de champ du dispositif selon l'invention ont une composante axiale (parallèlement à l'axe de rotation) qui est petite par rapport à la composante horizontale au niveau de la partie menée. La force d'attraction axiale, qui est une force indésirable à cause des phénomènes d'usure qu'elle entraîne à la fois au niveau de la partie menée et du fond du récipient, est donc moindre à couple identique. Par conséquent un couple plus important peut être transmis à la partie menée sans augmenter l'usure de celle-ci, ni l'usure du fond du récipient. Expérimentalement, les présents inventeurs ont pu observer qu'il était possible dans certaines conditions d'obtenir un gain de couple de l'ordre de 30 %.

L'augmentation du couple qu'autorise la présente invention permet d'obtenir une capacité d'agitation plus importante, et de faire face par exemple aux cas d'encrassement du fond du récipient et aux variations éventuelles de viscosité des liquides contenus dans ce récipient. Egalement, elle rend possible l'augmentation de l'entrefer entre les parties menante et menée afin par exemple de permettre l'utilisation de récipients ayant une plus grande épaisseur.

Selon l'invention, la partie menée comprend un aimant permanent qui est de préférence réalisé en néodyme-fer-bore ou en samarium-cobalt. Ces matériaux résistent très bien à la démagnétisation, contrairement aux matériaux classiquement utilisés dans les dispositifs d'agitation antérieurs qui ont tendance à se démagnétiser assez facilement sans l'effet d'un champ magnétique antagoniste, ce qui nécessite un remplacement régulier des aimants et donc augmente les coûts de maintenance de ces dispositifs.

Selon un premier mode de réalisation de la présente invention, la partie menante comprend au moins un aimant permanent, ayant au moins une paire de pôles magnétiques dont les faces actives sont sensiblement parallèles à l'axe de rotation. Les pôles magnétiques d'une paire donnée ont typiquement des polarités différentes.

Avantageusement, au moins les pôles de l'aimant permanent de la partie menante sont réalisés en un matériau anisotrope. L'aimant permanent est alors disposé de telle sorte que la direction d'aimantation du matériau anisotrope soit sensiblement perpendiculaire à l'axe de rotation de la partie menée. Le matériau anisotrope comprend par exemple du ferrite de strontium.

Les pôles magnétiques de l'aimant permanent de la partie menante sont éventuellement séparés par une pièce centrale conçue en un matériau ferromagnétique, tel que du fer doux. Cette pièce centrale permet d'éviter les fuites magnétiques suivant une direction parallèle à l'axe de rotation entre les pôles de l'aimant permanent.

Le moyen de commande comprend un moyen d'entraînement pour entraîner en rotation la partie menante, lequel moyen d'entraînement inclut un moteur et un moyen de transmission pour coupler le moteur à la partie menante.

Selon un second mode de réalisation de l'invention, la partie menante comprend au moins un électroaimant, ayant au moins deux paires de pôles magnétiques dont les faces actives sont sensiblement parallèles à l'axe de rotation. Le moyen de commande comprend alors un moyen d'alimentation pour alimenter ledit au moins un électroaimant en courant alternatif.

Ledit au moins un électroaimant consiste typiquement en un nombre entier p, supérieur ou égal à deux d'électroaimants, et le moyen d'alimentation alimente les p électroaimants en courant alternatif p-phasé. Les p électroaimants sont agencés en croix, chaque électroaimant constituant une branche de la croix.

Selon un troisième mode de réalisation de la présente invention, la partie menante comprend au moins un aimant permanent, ayant au moins une paire de pôles magnétiques, et la distance séparant les pôles magnétiques d'une paire donnée est sensiblement égale ou supérieure à la dimension de la partie menée suivant toute direction perpendiculaire à l'axe de rotation. Par "sensiblement égale" on entend une distance qui est égale, légèrement supérieure ou légèrement inférieure à la dimension de la partie menée suivant toute direction perpendiculaire à l'axe de rotation. La distance séparant les pôles magnétiques d'une paire donnée est mesurée entre les faces internes en regard de la paire de pôles.

Les faces actives de ladite au moins une paire de pôles magnétiques sont de préférence sensiblement perpendiculaires à l'axe de rotation.

La partie menante est entraînée en rotation par un moyen d'entraînement constitué par un moteur et un moyen de transmission pour coupler le moteur à la partie menante.

Selon un quatrième mode de réalisation de l'invention, la partie menante comprend au moins un électroaimant, ayant au moins deux paires de pôles magnétiques, et la distance séparant les pôles magnétiques d'une paire donnée est sensiblement égale ou supérieure à la dimension de la partie menée suivant toute direction perpendiculaire à l'axe de rotation. Le moyen de commande comprend alors un moyen d'alimentation pour alimenter ledit au moins un électroaimant en courant alternatif. Ledit au moins un électroaimant consiste par exemple en un nombre entier p, supérieur ou égal à deux d'électroaimants et le moyen d'alimentation alimente les p électroaimants en courant alternatif p-phasé. La partie menante comporte une culasse comprenant p paires de dents dirigées sensiblement parallèlement à l'axe de rotation, chaque paire de dents constituant des noyaux autour desquels sont enroulées des bobines d'un électroaimant. La culasse est formée de tôles de forme générale cylindrique, concentriques et empilées radialement.

Dans les modes de réalisation ci-dessus, la partie menée peut se présenter sous la forme d'un barreau ayant au moins une partie centrale cylindrique. En outre, un élément magnétique capable de produire une dissymétrie dans les lignes de champ peut être prévu, de telle sorte que la partie menée soit également entraînée en rotation autour d'un axe longitudinal de celle-ci, perpendiculaire audit axe de rotation, par couplage magnétique. Cet élément magnétique peut être situé sur la partie menée ou la partie menante, et plus précisément sur ou à proximité d'un pôle magnétique de la partie menante ou de la partie menée. L'élément magnétique est une pièce conçue en un matériau ferromagnétique tel que du fer doux.

Selon un autre aspect de l'invention, le dispositif d'agitation comprend une paroi de confinement conçue en un matériau amagnétique pour confiner notamment le récipient et protéger la partie menante du liquide contenu dans celui-ci. Ainsi, le dispositif d'agitation peut être utilisé pour agiter des réactifs dangereux, comportant par exemple des matières nucléaires.

Les caractéristiques et avantages de la présente invention apparaîtront à la lecture de la description détaillée suivante de plusieurs modes de réalisation faite en référence aux dessins annexés dans lesquels :
- la figure 1A est un schéma d'un premier dispositif connu d'agitation de liquide à accouplement magnétique ;
- la figure 1B est un schéma d'un second dispositif connu d'agitation de liquide à accouplement magnétique ;
- la figure 2A est un schéma d'un agencement de parties menante et menée utilisé dans le dispositif illustré à la figure 1A ;
- la figure 2B est un schéma d'un agencement de parties menante et menée utilisé dans le dispositif illustré à la figure 1B ;
- la figure 2C est une vue de dessus schématique de l'agencement illustré à la figure 2A ;
- la figure 3A est un schéma montrant un dispositif d'agitation de liquide selon un premier mode de réalisation de la présente invention, et plus particulièrement un agencement de parties menante et menée de ce dispositif ;
- la figure 3B est une vue de dessus schématique de l'agencement de parties menante et menée illustré à la figure 3A ;
- la figure 4A est un schéma montrant un dispositif d'agitation de liquide selon un second mode de réalisation de la présente invention, et plus particulièrement un agencement de parties menante et menée de ce dispositif ;
- la figure 4B est une vue de dessus schématique de l'agencement de parties menante et menée illustré à la figure 4A ;
- la figure 5 est un schéma montrant un dispositif d'agitation de liquide selon un troisième mode de réalisation de la présente invention, et plus particulièrement un agencement de parties menante et menée de ce dispositif ;
- la figure 6A est un schéma montrant un dispositif d'agitation de liquide selon un quatrième mode de réalisation de la présente invention, et plus particulièrement un agencement de parties menante et menée de ce dispositif ;
- la figure 6B est un schéma montrant un circuit magnétique utilisé en tant que partie menante dans le dispositif illustré à la figure 6A ;
- la figure 7A est une vue en perspective schématique d'un aimant permanent menant utilisé dans le dispositif illustré à la figure 3A ;
- la figure 7B est une vue en perspective schématique d'un aimant permanent menant utilisé dans le dispositif illustré à la figure 5 ;
- la figure 8A est un schéma montrant un aimant mené qui peut être utilisé dans les dispositifs illustrés aux figures 3A, 4A, 5 et 6A ;
- la figure 8B est une vue de côté de l'aimant mené illustré à la figure 8A ; et
- la figure 9 est un schéma illustrant l'effet produit sur un aimant mené par un élément magnétique de dissymétrie inclus dans les dispositifs illustrés aux figures 3A, 4A, 5 et 6A.

Les figures 3A et 3B montrent schématiquement, respectivement en vue de face et de dessus, un dispositif d'agitation de liquide selon un premier mode de réalisation de la présente invention. Aux figures 3A et 3B, sont représentés, principalement, la partie menante, la partie menée et le récipient, respectivement désignés par 13, 14 et 5₁. Le dispositif d'agitation selon l'invention comprend également, notamment, des éléments du type des éléments 2, 3 et 6 illustrés à la figure 1A et qui n'ont pas été représentés aux figures 3A et 3B pour des raisons de clarté. Plus particulièrement, la partie menante 13, placée sous le récipient 5₁ au fond duquel a été déposée la partie menée 14, est entraînée en rotation par un moteur autour d'un axe de symétrie vertical 8₁, et entraîne alors en rotation la partie menée 4 autour de ce même axe par couplage, ou accouplement, magnétique sans contact. Le récipient 5₁, ou seulement une partie inférieure 50₁ de celui-ci proche de la partie menante 13, est conçu en un matériau amagnétique.

La partie menée 14 est un barreau magnétique ayant un pôle Sud 140 et un pôle Nord 141, tous deux par exemple de forme tronconique, et une partie centrale cylindrique 142. Le barreau magnétique 14 est conçu par exemple en néodyme-fer-bore.

La partie menante 13 comprend un aimant permanent dont les faces actives 130 et 131, c'est-à-dire les faces à travers lesquelles sort l'essentiel du champ magnétique produit par l'aimant, sont parallèles à l'axe de rotation 8₁. Cet aimant permanent est constitué par une pièce polaire Nord 132 et une pièce polaire Sud 133, séparées par un noyau 134 de matériau ferromagnétique tel que du fer doux, et un support amagnétique 135 supportant les éléments 132 à 134. Les longueurs des parties menante 13 et menée 14 sont de préférence sensiblement égales afin que les pièces polaires Nord 132 et Sud 133 de la partie menante 13 soient situées au-dessous respectivement des pôles Sud 140 et Nord 141 du barreau magnétique 14. Dès qu'il est déposé au fond du récipient, le barreau magnétique 14 se positionne de telle sorte que son axe de symétrie, et de rotation, vertical 8₁ soit confondu avec l'axe de symétrie vertical de la partie menante 13.

Selon l'invention, les pièces polaires 132 et 133 de la partie menante 13 sont réalisées en un matériau anisotrope, par exemple du ferrite de strontium. Le matériau anisotrope est taillé de façon que sa direction d'aimantation 136, et donc son champ rémanent, soient orientés parallèlement au barreau magnétique 14, c'est-à-dire perpendiculairement à l'axe 8₁. En pratique, l'axe 8₁ est vertical et la direction d'aimantation 136 horizontale.

Le noyau de fer doux 134 permet d'éviter qu'une partie du champ magnétique entre les pôles 132 et 133 ne s'échappe vers le barreau 14 le long de l'axe 8₁, ce qui accroîtrait l'effort axial entre les parties menante et menée. Le champ magnétique à l'intérieur du noyau 134 est orienté horizontalement.

L'aimant menant 132-133-134 et l'aimant mené 14 selon l'invention produisent un champ magnétique de couplage dont, généralement, les lignes de champ 15 partent sensiblement horizontalement de la face active latérale 130 de la pièce polaire Nord 132 pour arriver sensiblement horizontalement sur le pôle Nord 140 du barreau magnétique mené 14 et partent sensiblement horizontalement du pôle Nord 141 du barreau mené 14 pour arriver sensiblement horizontalement sur la face active latérale 131 de la pièce polaire Sud 133 de manière à former une boucle, comme illustré schématiquement à la figure 3A. Les lignes de champ 15 sont plus particulièrement orientées, à proximité des pôles de l'aimant mené 14, sensiblement parallèlement à l'axe longitudinal, désigné par 143, de l'aimant mené. Etant donné que le nombre de lignes de champ orientées suivant une direction dont la composante axiale est significative à proximité du barreau magnétique 14 est nettement réduit par rapport à l'agencement montré à la figure 2A, l'effort axial entre les parties menante et menée est minimisé.

Conformément à la présente invention, une paroi de protection étanche 145 est prévue entre la partie menante 13 et le récipient 5₁. La paroi de protection 145, conçue en un matériau amagnétique, permet de protéger la partie menante 13 et les éléments associés (moteur, moyens de transmission) des réactifs chimiques contenus dans le récipient 5₁. Cette caractéristique de la présente invention trouve une application particulièrement intéressante dans le domaine nucléaire. En effet, lorsque les réactifs contenus dans le récipient sont des matières nucléaires, la paroi de protection 145 peut être utilisée pour confiner la partie dangereuse du dispositif, comprenant notamment la partie menée et le récipient.

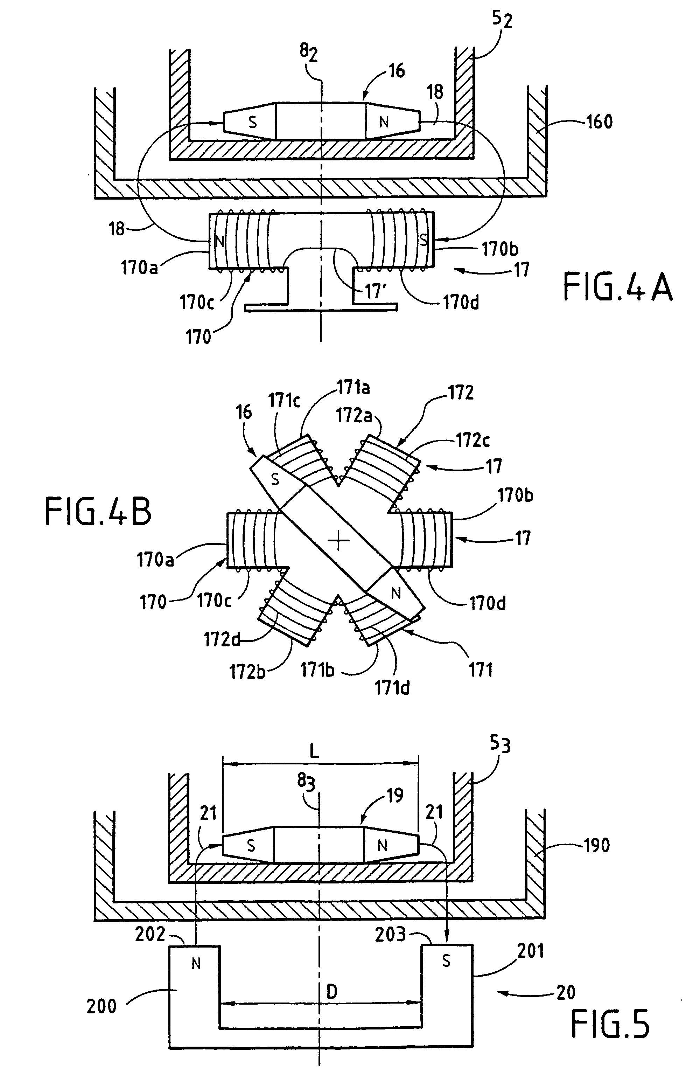

Les figures 4A et 4B montrent de manière schématique, respectivement en vue de face simplifiée et en vue de dessus, un second mode de réalisation du dispositif d'agitation de liquide conforme à l'invention. Selon ce second mode de réalisation, le dispositif d'agitation comprend notamment une partie menée 16 identique à la partie menée 14 illustrée aux figures 3A et 3B et posée dans un récipient 5₂, une paroi de protection 160, et une partie menante à motorisation statique 17 disposée sous le récipient 5₂ et la paroi de protection 160. De préférence, la longueur de la partie menante 17 est sensiblement égale à celle de la partie menée 16. La partie menante 17 comprend trois électroaimants 170, 171 et 172 fixes disposés horizontalement et alimentés par une source d'alimentation électrique alternative, sinusoïdale, polyphasée (non représentée). Les faces actives 170a-170b, 171a-171b et 172a-172b des électroaimants respectifs 170, 171 et 172 sont parallèles à l'axe de rotation 8₂ de la partie menée.

Les électroaimants sont disposés en forme de croix à trois branches, chaque électroaimant formant une branche de la croix. Chaque électroaimant 170, 171 et 172 est constitué d'un noyau horizontal autour des extrémités duquel une paire de bobines 170c-170d, 171c-171d et 172c-172d, respectivement, est enroulée. Les bobines de chaque électroaimant sont reliées entre elles, comme le montre le fil 17' à la figure 4A pour l'électroaimant 170.

Les bobines des électroaimants 170, 171 et 172 sont alimentées par un courant triphasé. Plus précisément, la paire de bobines 170c-170d, la paire de bobines 171c-171d et la paire de bobines 172c-172d sont respectivement alimentées par des courants alternatifs qui sont déphasés l'un par rapport à l'autre de 120°. Chaque face active d'un électroaimant constitue un pôle magnétique dont la polarité varie en fonction de la phase du courant alternatif appliqué aux bobines correspondantes. Un champ électromagnétique tournant est ainsi produit, de manière équivalente au champ produit par l'aimant tournant 13 des figures 3A et 3B. Grâce à la disposition horizontale des électroaimants, les lignes de champ 18 entre les faces actives 170a, 170b, 171 a, 171b, 172a et 172b et les pôles magnétiques de l'aimant mené 16 sont comparables aux lignes de champ 15 des figures 3A et 3B. Notamment, les lignes de champ 18 sont, de manière générale, orientées sensiblement parallèlement à l'axe longitudinal de l'aimant mené 16 à proximité de ce dernier.

Le mode de réalisation illustré aux figures 4A et 4B utilise trois électroaimants. Toutefois, un nombre différent, supérieur ou égal à deux, d'électroaimants peuvent être employés. De manière générale, pour un nombre entier p, supérieur ou égal à deux d'électroaimants, les électroaimants sont agencés selon une croix à p branches et un courant p-phasé alimente les électroaimants. Chaque électroaimant est alors alimenté par un courant alternatif dont la phase est décalée de +(360°/p) et -(360°/p) par rapport respectivement aux deux électroaimants les plus proches.

La figure 5 montre un dispositif d'agitation de liquide selon un troisième mode de réalisation de la présente invention. Le dispositif d'agitation selon ce troisième mode de réalisation comprend notamment un aimant mené 19 identique aux aimants 14 et 16 et posé dans un récipient 5₃, un aimant menant en forme de U 20, un récipient 5₃, des éléments (non représentés) identiques aux éléments 2 et 3 de la figure 1A pour entraîner en rotation l'aimant menant 20 autour d'un axe de symétrie vertical 8₃ des aimants menant et mené, et une paroi de protection 190. L'aimant menant 20 comprend un pôle magnétique Nord 200 et un pôle magnétique Sud 201, symétriques par rapport à l'axe 8₃ et dont les faces actives 202 et 203 sont perpendiculaires à l'axe 8₃, c'est-à-dire parallèles à l'aimant mené 19.

Conformément à la présente invention, la distance D entre les pôles 200 et 201 de l'aimant menant 20 est au moins sensiblement égale, c'est-à-dire est sensiblement égale ou supérieure, à la longueur L de l'aimant mené 19. De cette manière, les lignes de champ 21 à proximité de l'aimant mené 19 sont généralement orientées sensiblement perpendiculairement à l'axe de rotation 8₃ de l'aimant mené et, plus pécisément, de manière sensiblement parallèle à l'axe longitudinal de l'aimant mené.

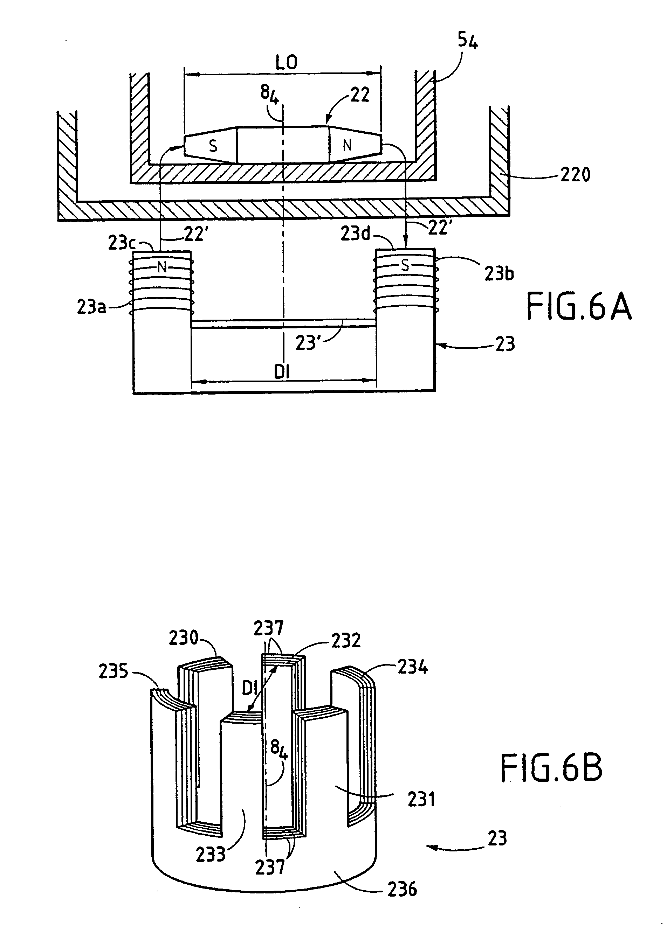

La figure 6A montre, en vue de face simplifiée, un dispositif d'agitation de liquide selon un quatrième mode de réalisation de la présente invention. Le dispositif d'agitation selon ce quatrième mode de réalisation comprend notamment un aimant mené 22 identique aux aimants 14, 16 et 19 et posé dans un récipient 5₄, une partie menante à motorisation statique 23 et une paroi de protection 220.

La partie menante 23 comprend plusieurs électroaimants disposés verticalement (un seul électroaimant est représenté à la figure 6A). Chaque électroaimant comprend une paire de bobines 23a-23b enroulées autour de deux noyaux verticaux symétriques par rapport à un axe de symétrie vertical 8₄ de l'aimant mené 22 et de la partie menante 23. Les bobines de chaque électroaimant sont reliées entre elles, comme montré schématiquement par le fil 23'.

Chaque électroaimant est alimenté par un courant alternatif au moyen d'une source d'alimentation (non représentée), et présente deux pôles magnétiques à polarité variable dont les faces actives 23c, 23d sont perpendiculaires à l'axe 8₄. La polarité des pôles magnétiques varie de façon périodique en fonction de la phase du courant alimentant l'électroaimant, de sorte qu'un champ électromagnétique tournant est produit dans l'entrefer entre les parties menante et menée.

La figure 6B montre en perspective un exemple de circuit magnétique utilisé en tant que motorisation statique 23. A la figure 6B, les bobines n'ont pas été représentées pour des raisons de clarté. Le circuit magnétique comprend une culasse formée de trois paires de dents verticales 230-231, 232-233 et 234-235 disposées circulairement sur une embase cylindrique 236. Chaque dent 230 à 235 constitue un noyau autour duquel est enroulée une bobine. Ainsi, chaque paire de dents 230-231, 232-233 et 234-235 est destinée à recevoir une paire de bobines symétriques par rapport à l'axe 8₄ pour former un électroaimant. La culasse est formée de tôles en forme de cylindres concentriques 237 empilées radialement.

Conformément à la présente invention, le diamètre interne DI de la culasse est sensiblement égal à la longueur LO de l'aimant mené 22 ou est supérieur à celle-ci, afin que les lignes de champ 22' soient orientées sensiblement perpendiculairement à l'axe 8₄ au niveau des pôles de l'aimant mené 22.

Dans l'exemple illustré à la figure 6B, trois paires de bobines sont utilisées. Ces trois paires de bobines sont alimentées par un courant triphasé, c'est-à-dire que chaque paire de bobines reçoit un courant alternatif déphasé de 120° et -120° par rapport respectivement aux deux autres paires de bobines. De manière générale, comme décrit précédemment en référence aux figures 4A et 4B, le circuit magnétique constituant la partie menante 23 peut comprendre un nombre entier p, supérieur ou égal à deux, de paires de bobines (c'est-à-dire un nombre entier p, supérieur ou égal à deux d'électroaimants) alimentées par un courant p-phasé.

La description des quatre modes de réalisation ci-dessus a été produite pour un aimant mené ayant une forme générale cylindrique. Il apparaîtra clairement à l'homme du métier que d'autres formes peuvent être prévues pour l'aimant mené. Par exemple, ce dernier peut avoir une configuration en croix horizontale avec deux paires de pôles magnétiques. Dans les troisième et quatrième modes de réalisation, illustrés aux figures 5 et 6A, 6B, la distance D entre les pôles magnétiques de l'aimant menant 20 (figure 5) et le diamètre DI de la culasse du circuit magnétique 23 (figure 6B) sont choisis, de manière générale, de telle sorte qu'ils soient sensiblement égaux ou supérieurs à la dimension de l'aimant mené suivant toute direction perpendiculaire à l'axe de rotation.

Dans toutes les réalisations de la présente invention telles qu'elles ont été décrites ci-dessus en référence aux figures 3 à 6, lorsque l'aimant mené 14, 16, 19 et 22 se présente sous la forme d'un barreau sensiblement cylindrique, celui-ci est entraîné en rotation autour d'un axe de symétrie 8₁ à 8₄ qui est orthogonal à son axe longitudinal. La partie de l'aimant mené qui est en contact avec le fond du récipient 5₁ à 5₄ à un instant donné est une ligne génératrice, désignée à la figure 3A par le repère 144, parallèle à l'axe longitudinal de l'aimant mené.

Selon une variante de l'invention, afin d'éviter que la ligne génératrice en contact avec le fond du récipient reste inchangée pendant la rotation de l'aimant mené, c'est-à-dire que l'aimant mené s'use par frottement avec le fond du récipient essentiellement le long d'une unique ligne génératrice et au voisinage de celle-ci, il est prévu de placer un élément magnétique de dissymétrie, ou de déséquilibre, sur l'aimant mené ou la partie menante. Cet élément magnétique est de préférence une pièce conçue en un matériau ferromagnétique tel que du fer doux, et vise à produire une dissymétrie dans les lignes de champ entre les parties menante et menée afin de faire tourner l'aimant mené autour de son axe longitudinal. Dans les premier et troisième modes de réalisation de l'invention utilisant un aimant permanent tournant en tant que partie menante (figures 3 et 5), l'élément de dissymétrie est de préférence situé sur l'un des pôles magnétiques de l'aimant menant, pièce non soumise à l'usure, mais peut également être placé sur l'un des pôles magnétiques de l'aimant mené. Dans les second et quatrième modes de réalisation utilisant une motorisation statique en tant que partie menante (figures 4 et 6), l'élément de dissymétrie est situé sur l'un des pôles magnétiques de l'aimant mené.

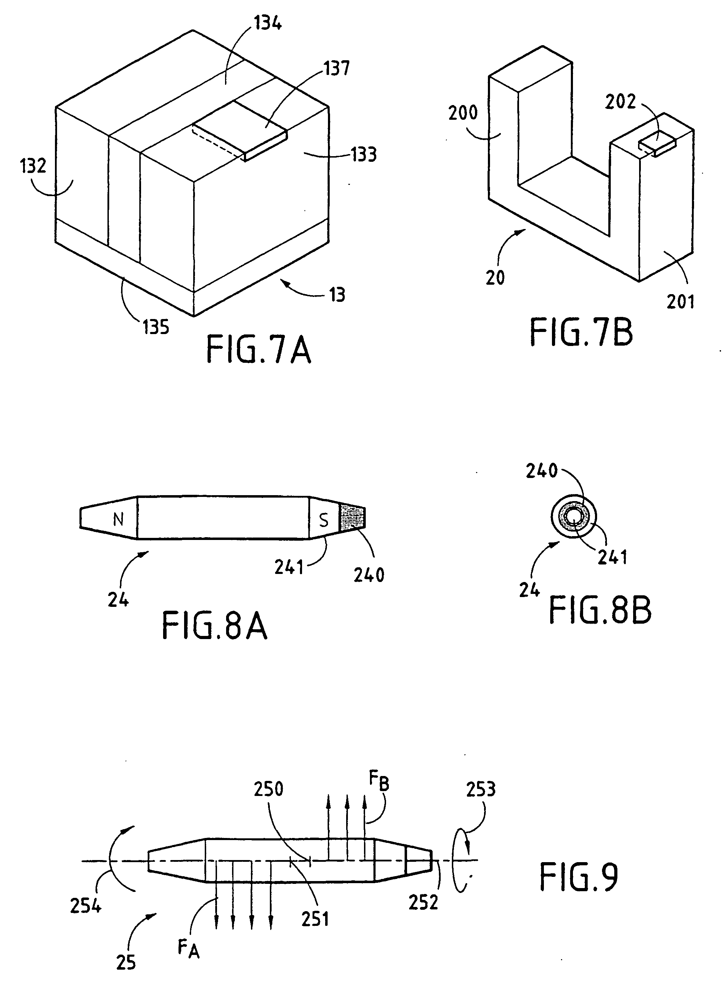

En référence à la figure 7A, qui montre en perspective l'aimant menant 13 des figures 3A et 3B, l'élément de dissymétrie, désigné par 137, peut être disposé dans une entaille appropriée pratiquée sur la pièce polaire 133. De façon comparable, dans le troisième mode de réalisation de l'invention (figure 5), l'élément de dissymétrie peut être disposé dans une entaille appropriée pratiquée sur la pièce polaire 201 de l'aimant menant 20, comme montré par le repère 202 à la figure 7B.

Les figures 8A et 8B montrent un barreau magnétique 24, du type des aimants 14, 16, 19 et 22, sur lequel est placé un élément magnétique de dissymétrie 240. L'élément 240 est plus particulièrement disposé sur la surface d'un pôle 241 du barreau 24 dans une entaille appropriée et a une forme adaptée à celle du pôle 241. Comme indiqué précédemment, le barreau magnétique 24 portant l'élément de dissymétrie 240 est plus particulièrement utilisé en tant qu'aimant mené 16 ou 22 lorsque l'on souhaite faire tourner ce dernier autour de son axe longitudinal dans les modes de réalisation à motorisation statique.

La figure 9 illustre, en vue de dessus, l'effet produit par l'élément magnétique de dissymétrie sur l'aimant mené, désigné par 25.

L'élément de dissymétrie modifie sensiblement les lignes de champ entre les parties menante et menée de sorte que le "centre de gravité magnétique" 250 de l'aimant mené devient différent du centre de symétrie 251. L'aimant mené tourne alors autour d'un axe vertical passant par le point 250 et non plus autour d'un axe vertical passant par le point 251. Les forces de frottement F_{A} et F_{B} exercées sur l'aimant de part et d'autre du point 250 par le fond du récipient ont des intensités résultantes respectives différentes. Le déséquilibre entre ces forces de frottement entraîne le barreau magnétique 25 en rotation autour de son axe longitudinal 252, comme montré par la flèche 253, tandis que le barreau magnétique 25 pivote autour de l'axe vertical passant par le centre magnétique 250, comme montré par la flèche 254.

Grâce au mouvement de rotation de l'aimant mené sur lui-même autour de son axe longitudinal, les forces de frottement exercées par le fond du récipient sur l'aimant sont réparties sur toute la surface cylindrique de l'aimant lors de la rotation de ce dernier autour de son axe de symétrie vertical. Dès lors, l'usure de l'aimant ne se concentre pas sur une zone particulière mais est répartie de façon homogène sur la surface.

## Revendications

1. Dispositif d'agitation de liquide à accouplement magnétique comprenant :
une partie menante (13 ; 17 ; 20 ; 23),
une partie menée (14 ; 16 ; 19 ; 22), se présentant sous la forme d'un barreau sensiblement cylindrique, et destinée à être déposée au fond d'un récipient (5₁ à 5₄) contenant du liquide à agiter, et
un moyen de commande (2, 3 ; 10) pour commander la partie menante de manière à entraîner la partie menée en rotation, par couplage magnétique avec la partie menante, autour d'un axe de rotation prédéterminé (8₁ à 8₄),
**caractérisé en ce qu'**il comprend en outre un élément magnétique (137, 202 ; 240) disposé sur la partie menée ou sur une partie mobile de la partie menante pour produire une dissymétrie dans les lignes de champ résultant du couplage magnétique, de telle sorte que la partie menée soit également entraînée en rotation autour d'un axe longitudinal (252) de celle-ci, perpendiculaire audit axe de rotation (8₁ à 8₄).

2. Dispositif selon la revendication 1, **caractérisé en ce que** la partie menée (14 ; 16 ; 19 ; 22) comprend un aimant permanent qui est de préférence réalisé en néodyme-fer-bore ou en samarium-cobalt.

3. Dispositif selon la revendication 1 ou 2, **caractérisé en ce que** les parties menante et menée sont configurées de façon à favoriser l'orientation des lignes de champ (15 ; 18 ; 21 ; 22') sensiblement perpendiculairement audit axe de rotation à proximité de la partie menée.

4. Dispositif selon la revendication 3, **caractérisé en ce que** la partie menante (13) comprend au moins un aimant permanent (13), ayant au moins une paire de pôles magnétiques (132, 133) dont les faces actives (130, 131) sont sensiblement parallèles à l'axe de rotation.

5. Dispositif selon la revendication 4, **caractérisé en ce qu'**au moins les pôles (132, 133) de l'aimant permanent (13) de la partie menante sont réalisés en un matériau anisotrope, et **en ce que** l'aimant permanent de la partie menante est disposé de telle sorte que la direction d'aimantation (136) du matériau anisotrope soit sensiblement perpendiculaire à l'axe de rotation (8₁) de la partie menée.

6. Dispositif selon la revendication 5, **caractérisé en ce que** ledit matériau anisotrope comprend du ferrite de strontium.

7. Dispositif selon l'une quelconque des revendications 4 à 6, **caractérisé en ce que** les pôles magnétiques de l'aimant permanent (13) de la partie menante sont séparés par une pièce centrale (134) conçue en un matériau ferromagnétique, tel que du fer doux.

8. Dispositif selon l'une quelconque des revendications 4 à 7, **caractérisé en ce que** le moyen de commande comprend un moyen d'entraînement (2, 3) pour entraîner en rotation la partie menante (13).

9. Dispositif selon la revendication 8, **caractérisé en ce que** le moyen d'entraînement comprend un moteur (2) et un moyen de transmission (3) pour coupler le moteur à la partie menante (13).

10. Dispositif selon l'une quelconque des revendications 1 à 3, **caractérisé en ce que** la partie menante comprend au moins un électroaimant (17), ayant au moins deux paires de pôles magnétiques dont les faces actives (172a, 173a, 172b, 173b, 172c, 173c) sont sensiblement parallèles à l'axe de rotation.

11. Dispositif selon la revendication 10, **caractérisé en ce que** le moyen de commande comprend un moyen d'alimentation (10) pour alimenter ledit au moins un électroaimant en courant alternatif.

12. Dispositif selon la revendication 11, **caractérisé en ce que** ledit au moins un électroaimant consiste en un nombre entier p, supérieur ou égal à deux, d'électroaimants (170, 171, 172), et le moyen d'alimentation alimente lesdits p électroaimants en courant alternatif p-phasé.

13. Dispositif selon l'une quelconque des revendications 1 à 3, **caractérisé en ce que** la partie menante comprend au moins un aimant permanent (20), ayant au moins une paire de pôles magnétiques (200, 201), et la distance (D) séparant les pôles magnétiques d'une paire donnée est sensiblement égale ou supérieure à la dimension (L) de la partie menée suivant toute direction perpendiculaire à l'axe de rotation (8₃).

14. Dispositif selon la revendication 13, **caractérisé en ce que** les faces actives (202, 203) de ladite au moins une paire de pôles magnétiques sont sensiblerrient perpendiculaires à l'axe de rotation (8₃).

15. Dispositif selon la revendication 13 ou 14, **caractérisé en ce que** le moyen de commande comprend un moyen d'entraînement (2, 3) pour entraîner en rotation la partie menante (20).

16. Dispositif selon la revendication 15, **caractérisé en ce que** le moyen d'entraînement comprend un moteur (2) et un moyen de transmission (3) pour coupler le moteur à la partie menante.

17. Dispositif selon l'une quelconque des revendications 1 à 3, **caractérisé en ce que** la partie menante comprend au moins un électroaimant (23), ayant au moins deux paires de pôles magnétiques, et la distance (DI) séparant les pôles magnétiques d'une paire donnée est sensiblement égale ou supérieure à la dimension (LO) de la partie menée (22) suivant toute direction perpendiculaire à l'axe de rotation (8₄).

18. Dispositif selon la revendication 17, **caractérisé en ce que** les faces actives (23c, 23d) desdites au moins deux paires de pôles magnétiques sont sensiblement perpendiculaires à l'axe de rotation (8₄).

19. Dispositif selon la revendication 17 ou 18, **caractérisé en ce que** le moyen de commande comprend un moyen d'alimentation (10) pour alimenter ledit au moins un électroaimant (23) en courant alternatif.

20. Dispositif selon la revendication 19, **caractérisé en ce que** ledit au moins un électroaimant consiste en un nombre entier p, supérieur ou égal à deux, d'électroaimants (23a, 23b), et le moyen d'alimentation alimente lesdits p électroaimants en courant alternatif p-phasé.

21. Dispositif selon la revendication 20, **caractérisé en ce que** la partie menante comprend une culasse comportant p paires de dents (230-235) dirigées sensiblement parallèlement à l'axe de rotation (8₄), chaque paire de dents constituant un noyau d'un électroaimant.

22. Dispositif selon la revendication 21, **caractérisé en ce que** la culasse est formée de tôles (237) de forme générale cylindrique, concentriques et empilées radialement.

23. Dispositif selon l'une quelconque des revendications 1 à 22, **caractérisé en ce que** la partie menée (14 ; 16 ; 19 ; 22) se présente sous la forme d'un barreau ayant au moins une partie centrale cylindrique.

24. Dispositif selon l'une quelconque des revendications 1 à 23, **caractérisé en ce qu'**il comprend un élément magnétique (137, 202 ; 240) capable de produire une dissymétrie dans lesdites lignes de champ, de telle sorte que la partie menée soit également entraînée en rotation autour d'un axe longitudinal (252) de celle-ci, perpendiculaire audit axe de rotation (8₁ à 8₄), par couplage magnétique.

25. Dispositif selon la revendication 24, lorsqu'elle dépend au moins de la revendication 4 ou 13, **caractérisé en ce que** ledit élément magnétique est situé sur la partie menée ou la partie menante, de préférence sur la partie menante.

26. Dispositif selon la revendication 25, **caractérisé en ce que** l'élément magnétique est situé sur ou à proximité d'un pôle magnétique de la partie menante ou de la partie menée.

27. Dispositif selon la revendication 24, lorsqu'elle dépend au moins de la revendication 10 ou 17, **caractérisé en ce que** ledit élément magnétique (240) est situé sur la partie menée.

28. Dispositif selon la revendication 27, **caractérisé en ce que** ledit élément magnétique (240) est situé sur ou à proximité d'un pôle magnétique de la partie menée.

29. Dispositif selon l'une quelconque des revendications 24 à 28, **caractérisé en ce que** ledit élément magnétique est une pièce conçue en un matériau ferromagnétique tel que du fer doux.

30. Dispositif selon l'une quelconque des revendications 1 à 29, **caractérisé en ce qu'**il comprend une paroi de confinement (145 ; 160 ; 190 ; 220) conçue en un matériau amagnétique pour confiner notamment le récipient et protéger la partie menante du liquide contenu dans celui-ci.

## Patentansprüche

1. Vorrichtung mit Magnetkupplung zum Rühren von Flüssigkeit, umfassend:
- einen antreibenden Abschnitt (13; 17; 20; 23),
- einen angetriebenen Abschnitt (14; 16; 19; 22), der in der Form eines im wesentlichen zylinderförmigen Stabs vorliegt und dazu bestimmt ist, auf dem Boden eines Behälters (5₁ bis 5₄) angeordnet zu werden, welcher eine zu rührende Flüssigkeit enthält, und
- ein Steuermittel (2, 3; 10), um den antreibenden Abschnitt derart zu steuern, daß der angetriebene Abschnitt durch Magnetkupplung mit dem antreibenden Abschnitt in Rotation um eine vorbestimmte Rotationsachse (8₁ bis 8₄) herum angetrieben wird,
**dadurch gekennzeichnet,**
- **daß** die Vorrichtung ferner ein magnetisches Element (137, 202; 240) umfaßt, das auf dem angetriebenen Abschnitt oder auf einem beweglichen Abschnitt des antreibenden Abschnitts angeordnet ist, um eine Asymmetrie in den Feldlinien zu erzeugen, die aus der Magnetkupplung resultiert, so daß der angetriebene Abschnitt auch in Rotation um eine zur Rotationsachse (8₁ bis 8₄) senkrechte Längsachse (252) von diesem angetrieben wird.

2. Vorrichtung nach Anspruch 1, **dadurch gekennzeichnet, daß** der angetriebene Abschnitt (14; 16; 19; 22) einen Dauermagneten umfaßt, der vorzugsweise aus Neodym-Eisen-Bor oder Samariumkobalt hergestellt wird.

3. Vorrichtung nach Anspruch 1 oder 2, **dadurch gekennzeichnet, daß** der antreibende und der angetriebene Abschnitt derart ausgelegt sind, daß sie die Ausrichtung der Feldlinien (15; 18; 21; 22') im wesentlichen senkrecht zur Rotationsachse in der Nähe des angetriebenen Abschnitts begünstigen.

4. Vorrichtung nach Anspruch 3, **dadurch gekennzeichnet, daß** der antreibende Abschnitt (13) wenigstens einen Dauermagneten (13) umfaßt, der wenigstens ein Paar Magnetpole (132, 133) aufweist, deren aktive Seiten (130, 131) im wesentlichen parallel zur Rotationsachse sind.

5. Vorrichtung nach Anspruch 4, **dadurch gekennzeichnet, daß** wenigstens die Pole (132, 133) des Dauermagneten (13) des antreibenden Abschnitts aus einem anisotropen Werkstoff hergestellt sind, und **dadurch**, daß der Dauermagnet des antreibenden Abschnitts derart angeordnet ist, daß die Magnetisierungsrichtung (136) des anisotropen Werkstoffs im wesentlichen senkrecht zur Rotationsachse (8₁) des angetriebenen Abschnitts ist.

6. Vorrichtung nach Anspruch 5, **dadurch gekennzeichnet, daß** der anisotrope Werkstoff Strontiumferrit umfaßt.

7. Vorrichtung nach einem der Ansprüche 4 bis 6, **dadurch gekennzeichnet, daß** die Magnetpole des Dauermagneten (13) des antreibenden Abschnitts durch ein zentrales Teil (134) getrennt sind, das aus einem ferromagnetischen Werkstoff, beispielsweise Weicheisen, hergestellt ist.

8. Vorrichtung nach einem der Ansprüche 4 bis 7, **dadurch gekennzeichnet, daß** das Steuermittel ein Antriebsmittel (2; 3) umfaßt, um den antreibenden Abschnitt (13) in Rotation anzutreiben.

9. Vorrichtung nach Anspruch 8, **dadurch gekennzeichnet, daß** das Antriebsmittel einen Motor (2) und ein Übertragungsmittel (3) umfaßt, um den Motor an den antreibenden Abschnitt (13) zu koppeln.

10. Vorrichtung nach einem der Ansprüche 1 bis 3, **dadurch gekennzeichnet, daß** der antreibende Abschnitt wenigstens einen Elektromagneten (17) umfaßt, der wenigstens zwei Paar Magnetpole aufweist, deren aktive Seiten (172a, 173a, 172b, 173b, 172c, 173c) im wesentlichen parallel zur Rotationsachse sind.

11. Vorrichtung nach Anspruch 10, **dadurch gekennzeichnet, daß** das Steuermittel ein Versorgungsmittel (10) umfaßt, um den wenigstens einen Elektromagneten mit Wechselstrom zu versorgen.

12. Vorrichtung nach Anspruch 11, **dadurch gekennzeichnet, daß** der wenigstens eine Elektromagnet aus einer ganzen Zahl p, größer oder gleich zwei, von Elektromagneten (170, 171, 172) besteht und das Versorgungsmittel die p Elektromagnete mit p-phasiertem Wechselstrom versorgt.

13. Vorrichtung nach einem der Ansprüche 1 bis 13, **dadurch gekennzeichnet, daß** der antreibende Abschnitt wenigstens einen Dauermagneten (20) umfaßt, der wenigstens ein Paar Magnetpole (200, 201) aufweist, und **dadurch**, daß die Entfernung (D), welche die Magnetpole eines bestimmten Paars trennt, im wesentlichen gleich oder größer als die Abmessung (L) des angetriebenen Abschnitts entlang jeglicher Richtung senkrecht zur Rotationsachse (8₃) ist.

14. Vorrichtung nach Anspruch 13, **dadurch gekennzeichnet, daß** die aktiven Seiten (202, 203) des wenigstens einen Paars Magnetpole im wesentlichen senkrecht zur Rotationsachse (8₃) sind.

15. Vorrichtung nach einem der Ansprüche 13 oder 14, **dadurch gekennzeichnet, daß** das Steuermittel ein Antriebsmittel (2, 3) umfaßt, um den antreibenden Abschnitt (20) in Rotation anzutreiben.

16. Vorrichtung nach Anspruch 15, **dadurch gekennzeichnet, daß** das Antriebsmittel einen Motor (2) und ein Übertragungsmittel (3) umfaßt, um den Motor an den antreibenden Abschnitt zu koppeln.

17. Vorrichtung nach einem der Ansprüche 1 bis 3, **dadurch gekennzeichnet, daß** der antreibende Abschnitt wenigstens einen Elektromagneten (23) umfaßt, der wenigstens zwei Paar Magnetpole aufweist, und **dadurch**, daß die Entfernung (D), welche die Magnetpole eines bestimmten Paars trennt, im wesentlichen gleich oder größer als die Abmessung (LO) des angetriebenen Abschnitts (22) entlang jeglicher Richtung senkrecht zur Rotationsachse (8₄) ist.

18. Vorrichtung nach Anspruch 17, **dadurch gekennzeichnet, daß** die aktiven Seiten (23c, 23d) der wenigstens zwei Paare Magnetpole im wesentlichen senkrecht zur Rotationsachse (8₄) sind.

19. Vorrichtung nach Anspruch 17 oder 18, **dadurch gekennzeichnet, daß** das Steuermittel ein Versorgungsmittel (10) umfaßt, um den wenigstens einen Elektromagneten (23) mit Wechselstrom zu versorgen.

20. Versorgung nach Anspruch 19, **dadurch gekennzeichnet, daß** der wenigstens eine Elektromagnet aus einer ganzen Zahl p, größer oder gleich zwei, von Elektromagneten (23a, 23b) besteht, und **dadurch**, daß das Versorgungsmittel die p Elektromagnete mit p-phasiertem Wechselstrom versorgt.

21. Vorrichtung nach Anspruch 20, **dadurch gekennzeichnet, daß** der antreibende Abschnitt ein Joch umfaßt, welches p Paare von Zähnen (230-235) aufweist, die im wesentlichen parallel zur Rotationsachse (8₄) ausgerichtet sind, wobei jedes Paar Zähne einen Kern eines Elektromagneten bildet.

22. Vorrichtung nach Anspruch 21, **dadurch gekennzeichnet, daß** das Joch aus konzentrischen Blechen (237) mit allgemeiner zylindrischer Form ausgebildet ist, die radial geschichtet sind.

23. Vorrichtung nach einem der Ansprüche 1 bis 22, **dadurch gekennzeichnet, daß** der angetriebene Abschnitt (14; 16; 19; 22) in Form eines Stabs vorliegt, der wenigstens einen zentralen zylindrischen Abschnitt aufweist.

24. Vorrichtung nach einem der Ansprüche 1 bis 23, **dadurch gekennzeichnet, daß** sie ein Magnetelement (137, 202; 240) umfaßt, das in der Lage ist, eine Asymmetrie in den Feldlinien derart zu erzeugen, daß der angetriebene Abschnitt ebenfalls in Rotation um eine Längsachse (252) des Abschnitts, die senkrecht zur Rotationsachse (8₁ bis 8₄) ist, durch Magnetkupplung angetrieben wird.

25. Vorrichtung nach Anspruch 24, wenn dieser wenigstens von Anspruch 4 oder 13 abhängt, **dadurch gekennzeichnet, daß** das Magnetelement auf dem angetriebenen oder dem antreibenden Abschnitt angeordnet ist, vorzugsweise auf dem antreibenden Abschnitt.

26. Vorrichtung nach Anspruch 25, **dadurch gekennzeichnet, daß** das Magnetelement auf oder in der Nähe eines Magnetpols des antreibenden Abschnitts oder des angetriebenen Abschnitts angeordnet ist.

27. Vorrichtung nach Anspruch 24, wenn dieser wenigstens von Anspruch 10 oder 17 abhängt, **dadurch gekennzeichnet, daß** das Magnetelement (240) auf dem angetriebenen Abschnitt angeordnet ist.

28. Vorrichtung nach Anspruch 27, **dadurch gekennzeichnet, daß** das Magnetelement (240) auf oder in der Nähe eines Magnetpols des angetriebenen Abschnitts angeordnet ist.

29. Vorrichtung nach einem der Ansprüche 24 bis 28, **dadurch gekennzeichnet, daß** das Magnetelement ein Teil ist, das aus einem ferromagnetischen Werkstoff, beispielsweise Weicheisen, hergestellt ist.

30. Vorrichtung nach einem der Ansprüche 1 bis 29, **dadurch gekennzeichnet, daß** sie eine Begrenzungswand (145; 160; 190; 220) umfaßt, die aus einem unmagnetischen Werkstoff hergestellt ist, um insbesondere den Behälter zu begrenzen und den antreibenden Abschnitt der Flüssigkeit, die im Behälter enthalten ist, zu schützen.

## Claims

1. A liquid stirrer with magnetic coupling comprising:
a driving portion (13; 17; 20; 23);
a driven portion (14; 16; 19; 22) in the form of a substantially cylindrical bar for placing on the bottom of a receptacle (5₁ to 5₄) containing a liquid to be stirred; and
control means (2, 3; 10) for controlling the driving portion so as to drive the driven portion in rotation about a predetermined axis of rotation (8₁ to 8₄) by means of magnetic coupling with the driving portion,
the stirrer being **characterised in that** it further comprises a magnetic element (137, 202; 240) that is located on the driven portion or on a mobile portion of the driving portion to produce asymmetry in the field lines that result from the magnetic coupling, so that the driven portion is also driven in rotation about a longitudinal axis (252) thereof which is perpendicular to said axis of rotation (8₁ to 8₄).

2. A stirrer according to claim 1, **characterised in that** the driven portion (14; 16; 19; 22) comprises a permanent magnet which is preferably made of neodium-iron-boron or of samarium-cobalt.

3. A stirrer according to claim 1 or 2, **characterised in that** the driving and driven portions are configured so as to encourage the field lines (15; 18; 21; 22') to extend substantially perpendicularly to said axis of rotation in the vicinity of the driven portion.

4. A stirrer according to claim 3, **characterised in that** the driving portion (13) comprises at least one permanent magnet (13) having at least one pair of magnetic poles (132, 133) whose active faces (130, 131) are substantially parallel to the axis of rotation.

5. A stirrer according to claim 4, **characterised in that** at least the poles (132, 133) of the permanent magnet (13) of the driving portion are made of an anisotropic material, and **in that** the permanent magnet of the driving portion is placed in such a manner that the magnetization direction (136) of the anisotropic material is substantially perpendicular to the axis of rotation (8₁) of the driven portion.

6. A stirrer according to claim 5, **characterised in that** said anisotropic material comprises strontium ferrite.

7. A stirrer according to any one of claims 4 to 6, **characterised in that** the magnetic poles of the permanent magnet (13) of the driving portion are united by a central part (134) made of a ferromagnetic material such as soft iron.

8. A stirrer according to any one of claims 4 to 7, **characterised in that** the control means comprises drive means (2, 3) for rotating the driving portion (13).

9. A stirrer according to claim 8, **characterised in that** the drive means comprise a motor (2) and transmission means (3) for coupling the motor to the driving portion (13).

10. A stirrer according to any one of claims 1 to 3, **characterised in that** the driving portion comprises at least one electromagnet (17) having at least two pairs of magnetic poles whose active faces (172a, 173a, 172b, 173b, 172c, 173c) are substantially parallel to the axis of rotation.

11. A stirrer according to claim 10, **characterised in that** the control means comprises power supply means (10) for feeding said at least one electromagnet with AC.

12. A stirrer according to claim 11, **characterised in that** said at least one electromagnet is constituted by an integer number p of electromagnets (170, 171, 172) where p is greater than or equal to 2, and the power supply means feeds said p electromagnets with p-phase AC.

13. A stirrer according to any one of claims 1 to 3, **characterised in that** the driving portion comprises at least one permanent magnet (20) having at least one pair of magnetic poles (200, 201), and the distance (D) between the magnetic poles of a given pair is substantially equal to or greater than the size (L) of the driven portion in any direction perpendicular to the axis of rotation (8₃).

14. A stirrer according to claim 13, **characterised in that** the active faces (202, 203) of said at least one pair of magnetic poles are substantially perpendicular to the axis of rotation (8₃).

15. A stirrer according to claim 13 or 14, **characterised in that** the control means comprises drive means (2, 3) for rotating the driving portion (20).

16. A stirrer according to claim 15, **characterised in that** the drive means comprises a motor (2) and transmission means (3) for coupling the motor to the driving portion.

17. A stirrer according to any one of claims 1 to 3, **characterised in that** the driving portion comprises at least one electromagnet (23) having at least two pairs of magnetic poles, and the distance (DI) between the magnetic poles of a given pair is substantially equal to or greater than the size (LO) of the driven portion (22) in any direction perpendicular to the axis of rotation (8₄).

18. A stirrer according to claim 17, **characterised in that** the active faces (23c, 23d) of said at least two pairs of magnetic poles are substantially perpendicular to the axis of rotation (8₄).

19. A stirrer according to claim 17 or 18, **characterised in that** the control means comprises power supply means (10) for feeding said at least one electromagnet (23) with AC.

20. A stirrer according to claim 19, **characterised in that** said at least one electromagnet is constituted by an integer number p of electromagnets (23a, 23b) where p is greater than or equal to 2, and the power supply means feeds said p electromagnets with p-phase AC.

21. A stirrer according to claim 20, **characterised in that** the driving portion comprises a yoke having p pairs of teeth (230-235) extending substantially parallel to the axis of rotation (8₄), each pair of teeth constituting an electromagnet core.

22. A stirrer according to claim 21, **characterised in that** the yoke is made of laminations (237) of generally cylindrical shape that are concentric and stacked radially.

23. A stirrer according to any one of claims 1 to 22, **characterised in that** the driven portion (14; 16; 19; 22) is in the form of a bar having at least a central portion that is cylindrical.

24. A stirrer according to any one of claims 1 to 23, **characterised in that** it comprises a magnetic element (137, 202; 240) capable of producing asymmetry in said field lines in such a manner that, by magnetic coupling, the driven portion is also driven in rotation about a longitudinal axis (252) thereof which is perpendicular to said axis of rotation (8₁ to 8₄).

25. A stirrer according to claim 24, when dependent at least on claim 4 or claim 13, **characterised in that** said magnetic element is situated on the driven portion or the driving portion, and preferably on the driving portion.

26. A stirrer according to claim 25, **characterised in that** the magnetic element is situated on or close to a magnetic pole of the driving portion or of the driven portion.

27. A stirrer according to claim 24, when dependent at least on claim 10 or 17, **characterised in that** said magnetic element (240) is situated on the driven portion.

28. A stirrer according to claim 27, **characterised in that** said magnetic element (240) is situated on or close to a magnetic pole of the driven portion.

29. A stirrer according to any one of claims 24 to 28, **characterised in that** said magnetic element is a part made of a ferromagnetic material such as soft iron.

30. A stirrer according to any one of claims 1 to 29, **characterised in that** it includes a confinement wall (145; 160; 190; 220) made of a nonmagnetic material in particular for confining the receptacle and protecting the driving portion from the liquid contained in the receptacle.
